Europäisches Patentamt

European Patent Office

Office européen des brevets

(11) Numéro de publication: **0 406 093 A1**

## (12) DEMANDE DE BREVET EUROPEEN

(21) Numéro de dépôt: **90401808.2**

(22) Date de dépôt: **26.06.90**

(51) Int. Cl.5: **B01D 3/02**

(30) Priorité: **27.06.89 FR 8908555**

(43) Date de publication de la demande:
**02.01.91 Bulletin 91/01**

(84) Etats contractants désignés:
**AT BE CH DE DK ES FR GB GR IT LI LU NL SE**

(71) Demandeur: **SOCIETE NATIONALE ELF AQUITAINE (PRODUCTION)**
**Tour Elf, 2, Place de la Coupole, La Défense 6**
**F-92400 Courbevoie(FR)**

(72) Inventeur: **Duffas, Daniel**
**Palaminy**
**F-31220 Cazeres(FR)**
Inventeur: **Serna, Pierre**
**30 Avenue des Acacias, Roques**
**F-31120 Portet(FR)**

(74) Mandataire: **Boillot, Marc**
**SOCIETE NATIONALE ELF AQUITAINE**
**Division Propriété Industrielle Tour Elf**
**F-92078 Paris la Défense Cédex 45(FR)**

(54) **Dispositif de distillation en laboratoire.**

(57) La présente invention concerne un dispositif de distillation en laboratoire pour extraction de composés de pétrole brut constitué d'un récipient bouilleur en forme de ballon (1) relié à une colonne (16) d'extraction des vapeurs comprenant dans la partie bouilleur (1) une cheminée en tôle perforée (4) délimitant entre elle-même et les parois (13) du bouilleur un volume de chauffe, un collier chauffant (20) entourant au moins une partie de la surface externe du bouilleur dans la zone de la cheminée (4), caractérisé en ce qu'il comprend des moyens d'injection (30,31,6) à la base du volume de chauffe d'un gaz neutre dont le débit est régulé (62,63,64) en fonction du débit des vapeurs.

FIG. 1A

## DISPOSITIF DE DISTILLATION EN LABORATOIRE

La présente invention concerne un dispositif de distillation en laboratoire pour extraction de composés de pétrole brut.

Dans les raffineries on cherche à extraire du pétrole brut, des composés dont les points de distillation sont de plus en plus élevés, de manière à réduire la quantité de résidus, dont la valeur commerciale est généralement inférieure.

La composition du brut, c'est-à-dire le rendement des produits en fonction de la température de distillation est mesurée au laboratoire par distillation.

Dans les dispositifs connus, la distillation était habituellement réalisée en deux étapes principales.

Une première étape en colonnes à plateau ou à garnissage effectuée sous pression atmosphérique puis sous des pressions réduites allant jusqu'à un millimètre de mercure. A la fin de cette étape, le résidu récupéré dans le bouilleur a un point équivalent de distillation de 350 à 400 degrés.

Une deuxième étape dans laquelle le résidu précédent est ensuite évaporé sous un vide très poussé de 0,1 à 0,01 millimètre de mercure dans une colonne vide de garnissage. C'est la phase d'évaporation simple qui permet l'obtention de produits dont les températures d'ébullition équivalente atteignent 550 à 565 degrés Celsius.

Ces opérations sont conduites dans un bouilleur contenant le résidu qu'on évite de chauffer à des températures supérieures à 300-350 degrés Celsius selon la qualité du brut pour ne pas provoquer le craquage des molécules.

Ce risque de craquage des molécules hydrocarbonées par un chauffage excessif dans le bouilleur existe d'autant plus que la température de distillation est élevée et c'est en particulier dans la dernière phase de la distillation ou au-delà de 350 degrés qu'il est le plus probable.

Par ailleurs, l'analyse du mécanisme de transfert de chaleur entre la résistance chauffante du bouilleur et le liquide contenu par celui-ci permet de voir que pour une température mesurée T du liquide, la température Ti de ce même liquide, juste au contact de la paroi, est plus élevée.

On a donc tout intérêt, pour diminuer les risques de craquage, à réduire l'écart entre la température Ti et la température T.

Un premier but de l'invention est donc de proposer un dispositif de distillation en laboratoire permettant de pallier les inconvénients de l'art antérieur.

Ce but est atteint par le fait que le dispositif de distillation en laboratoire pour extraction de composés de pétrole brut constitué d'un bouilleur en forme de ballon relié à une colonne d'extraction des vapeurs comprenant dans la partie bouilleur une cheminée en tôle perforée délimitant entre elle-même et les parois du bouilleur un volume de chauffe, un collier chauffant entourant au moins une partie de la surface externe du bouilleur dans la zone de la cheminée, est caractérisé en ce que le bouilleur comprend des moyens d'injection à la base du volume de chauffe d'un gaz neutre dont le débit est régulé en fonction du débit des vapeurs extraites en haut de la colonne.

Un autre but de l'invention est également de diminuer les écarts de température entre la température du liquide dans le bouilleur et la température en tête de colonne, de façon à éviter le phénomène de reflux naturel interne.

Ce but est atteint par le fait que la colonne comprend un ensemble de colliers de chauffe auxiliaires disposés à intervalles réguliers autour de la colonne, la température de chauffe de ces colliers de chauffe étant régulée en fonction de la température des vapeurs.

Selon une particularité de l'invention, la température des vapeurs extraites est mesurée par un capteur de température au-dessus du liquide dans le bouilleur.

Selon une autre particularité de l'invention, la température des vapeurs extraites est mesurée par un capteur situé en tête de colonne.

De façon avantageuse, le débit du gaz d'injection est régulé à une valeur comprise entre 0,1 et dix fois le débit des vapeurs.

Selon une autre particularité de l'invention, les moyens d'injection du gaz sont constitués d'orifices percés dans une couronne ou par des tubes capillaires accessibles de l'extérieur par un raccord démontable.

Enfin selon une dernière particularité de l'invention la colonne et le bouilleur sont réalisés en une seule pièce d'un matériau conducteur thermique et l'ensemble est calorifugé à l'extérieur.

D'autres caractéristiques et avantages de la présente invention apparaîtront plus clairement à la lecture de la description ci-après faite en référence aux dessins annexés dans lesquels :

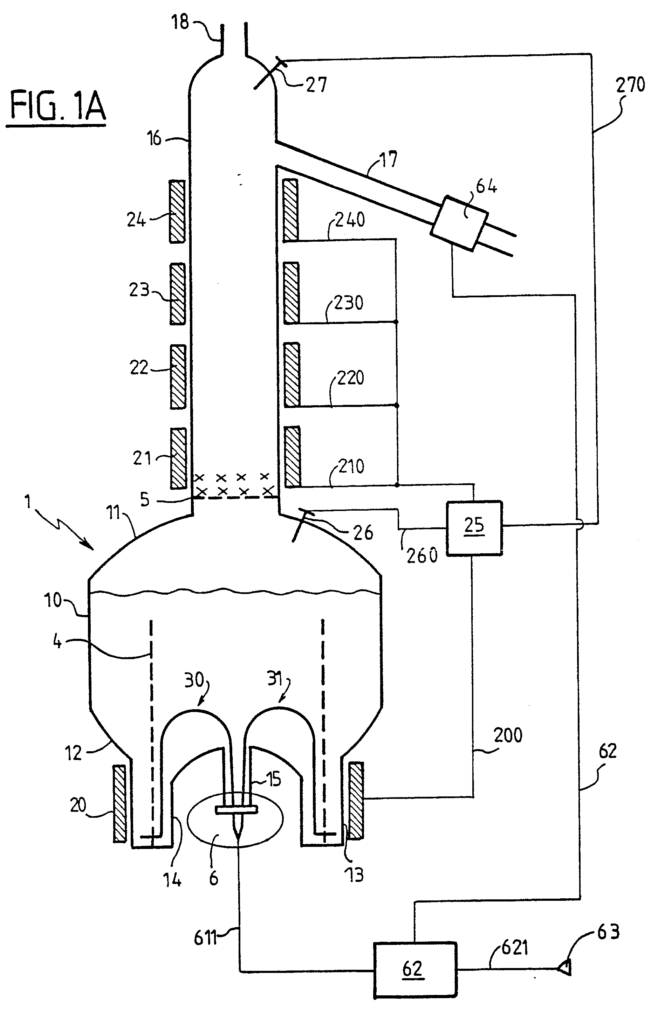

- la figure 1A représente une vue schématique en coupe du dispositif de l'invention;

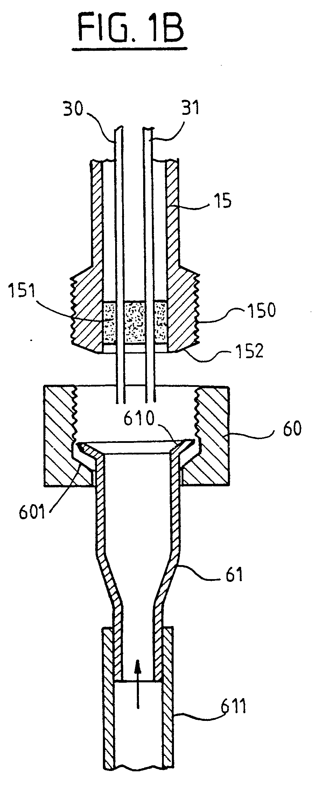

la figure 1B représente une vue en coupe d'un détail du dispositif de l'invention.

Le dispositif de distillation de la figure 1 comporte une colonne (16) en forme de tube éprouvette dont le fond comporte un orifice (18) d'évacuation et qui peut être fermé. Le sommet de la colonne en forme de tube (16) comporte également une évacuation latérale (17) pour évacuer les distillats vers un condenseur non représenté sur la figure. La base de la colonne formée par l'ouverture du tube débouche dans un ballon (1) constitué d'une portion hémisphérique (11) raccordée à une portion cylindrique (10) elle-même se raccordant vers le bas par une portion de sphère (12) avec un cylindre (13) formant l'embase ou zone de chauffe du bouilleur. A l'intérieur du cylindre (13) le bouilleur (1) est fermé par une partie concave (14) dont la partie centrale s'élève jusqu'au niveau de la jonction entre la partie sphérique (12) du bouilleur et sa portion cylindrique (10) et comporte un tube (15) permettant le passage de tubes capillaires (30,31). Dans la zone annulaire comprise entre la surface cylindrique externe (13) et une portion de surface cylindrique formant la concavité (14), le bouilleur comporte une cheminée (4) en tôle perforée. Les tubes capillaires (30,31) qui pénètrent dans le bouilleur par le tube (15) sont rendus solidaires de la base de cette cheminée (4) et débouchent dans l'espace annulaire formé à la base entre cette cheminée (4) et la surface interne du cylindre (13). En vis-à-vis de ce cylindre (13) se trouve un élément chauffant (20) permettant de chauffer le liquide dont on veut effectuer la distillation. Un garnissage anti-projection (5) est prévu à la jonction entre le bouilleur et la colonne (16). La colonne (16) est pourvue à intervalles réguliers d'éléments chauffants (21,22,23,24) dont le nombre est fonction de la dimension de la colonne et de la qualité de régulation en température que l'on veut obtenir dans celle-ci. Chacun des éléments chauffants (20) à (24) est relié par une liaison électrique respective (200) à (240) à un circuit (25) de régulation de la température des éléments chauffants en fonction des informations fournies par des capteurs de température (27,26) à travers les liaisons respectives (260,270). Un capteur de température (26) est situé à la partie supérieure de la portion hémisphérique (11) du bouilleur (1) et un deuxième capteur de température (27) se situe à la partie supérieure de la colonne (16). Le tube (17) débouche dans un débitmètre (64) qui envoie le résultat de ces mesures par une liaison (620) à un organe de régulation (62) qui permet de réguler le débit en gaz injecté par la canalisation (611) dans les tubes capillaires (30,31) et la puissance de chauffage de l'élément chauffant (20), en fonction du débit des vapeurs évacuées dans la canalisation (17) et mesurées par le débitmètre (64). La canalisation (17) en sortie du débitmètre est reliée à un condenseur non représenté. La source de gaz (63) est constituée d'un gaz neutre tel que par exemple de l'azote, de l'hélium etc. Cette source de gaz (63) est reliée par une canalisation (621) à l'organe de régulation (62).

Le dispositif de raccordement (6) de la canalisation (611) aux capillaires (30,31) est représenté à la figure 1A dans laquelle le tube (611) est rendu solidaire d'un raccord (61) se terminant à l'extrémité adjacente à un écrou (60) par un évasement (610) qui, lors du vissage de l'écrou (60) sur un filetage (150) de l'extrémité du tube (15) vient écraser à l'aide d'un épaulement (601) de l'écrou (60) la partie évasée (610) du raccord (61) sur l'épaulement correspondant (152) de la partie filetée (150) du tube (15) d'introduction des capillaires dans le bouilleur (1). Les capillaires (30,31) pénètrent dans ce tube (15) au travers d'une brasure (151) qui assure à la fois l'étanchéité et le maintien de ces capillaires. lors du démontage de l'écrou (60) Ce montage de l'embout (6) d'amenée des gaz permet un démontage facile et un accès à l'extrémité d'entrée des tubes capillaires pour assurer un nettoyage aisé de ces derniers par introduction d'une aiguille souple en cas de bouchage de ceux-ci. L'ensemble colonne-bouilleur réalisé en une seule pièce, de préférence en matériau métallique ou verre, présente l'avantage, par rapport à une solution dans laquelle le bouilleur et la colonne sont réalisés en deux pièces, d'éviter un joint torique qui, mis à rude épreuve par les niveaux de température, perd rapidement de son étanchéité. L'injection de gaz à la base de la partie chauffante du bouilleur permet d'augmenter le degré de turbulence et de ce fait réduire l'écart entre la température mesurée T du liquide et la température Ti de ce même liquide au contact de la paroi. De plus, les bulles de gaz introduites dans l'espace annulaire diminuent la densité apparente du liquide et provoquent un effet "gaz lift" qui s'ajoute à l'effet thermo-siphon d'où le fait que la densité du liquide chauffé au contact de la paroi est plus faible que celle du liquide à l'intérieur de la cheminée. Ces deux effets cumulés augmentent la vitesse de circulation du liquide et donc le degré de turbulence. Ce dispositif permet ainsi d'obtenir des coefficients de transfert de chaleur plus élevés et de ce fait une température de peau Ti plus proche de la température T. En diminuant ces écarts de température pour atteindre une température de distillation donnée on évite ainsi les risques de craquage des produits. Enfin le chauffage de la colonne, notamment au voisinage de la jonction entre le col du ballon et la base de la colonne, permet de limiter les fuites thermiques à ce niveau et supprime pratiquement le reflux naturel interne qui auparavant était difficilement contrôlable. Ce dispositif permet d'enregistrer un gain de température de 30 à 50 degrés Celsius dont une partie peut être utilisée pour assurer un reflux contrôlé dans la tête de la colonne et obtenir ainsi une meilleure efficacité dans le fonctionnement des coupes de distillation. De façon avantageuse le gaz injecté dans la partie inférieure du ballon sera régulé pour avoir des débits compris entre 0,1 et dix fois le débit des vapeurs.

Le dispositif ainsi décrit présente de nombreux avantages. En effet, en diminuant la pression partielle des composés à évaporer dans la phase vapeur, le gradient moteur du transfert de matière est plus grand. De même, en augmentant l'aire d'échange entre la phase liquide et la phase vapeur, ce dispositif permet d'obtenir des vitesses de distillation plus élevées.

Un tel dispositif assure une nucléation artificielle qui régularise le régime de distillation et permet d'éviter les à-coups provoqués par la nucléation naturelle. L'augmentation de la surface d'échange permet également une meilleure extraction des composés et réduit également la distance à parcourir par ces composés entre le sein du liquide et l'interface.

Un dernier avantage est le montage monobloc de la colonne et du bouilleur qui élimine ainsi les risques de rupture d'une partie du dispositif ou une défaillance du joint d'étanchéité ainsi que des différences de conductivités dues à l'utilisation d'une colonne en verre et d'un bouilleur métallique comme dans la technique antérieure.

Toute modification de l'invention à la portée de l'homme de métier fait également partie de l'esprit de l'invention.

Ainsi, les capillaires peuvent déboucher à la base de la cheminée (4) dans une couronne (non représentée) pourvue d'orifices d'injection du gaz dans le liquide.

## Revendications

1) Dispositif de distillation en laboratoire pour extraction de composés de pétrole brut constitué d'un récipient bouilleur en forme de ballon (1) relié à une colonne (16) d'extraction des vapeurs comprenant dans la partie bouilleur (1) une cheminée en tole perforée (4) délimitant entre elle-même et les parois (13) du bouilleur un volume de chauffe, un collier chauffant (20) entourant au moins une partie de la surface externe du bouilleur dans la zone de la cheminée (4), caractérisé en ce qu'il comprend des moyens d'injection (30,31,6) à la base du volume de chauffe d'un gaz neutre dont le débit est régulé (62,63,64) en fonction du débit des vapeurs.

2) Dispositif selon la revendication 1, caractérisé en ce qu'il comprend un ensemble (21 à 24) de colliers de chauffe auxiliaires disposés à intervalles réguliers autour de la colonne (16) et dont la température de chauffe est régulée par un dispositif de régulation (25) en fonction de la température des vapeurs extraites.

3) Dispositif selon la revendication 2, caractérisé en ce que la température des vapeurs extraites est mesurée par un capteur (26) de température au-dessus du liquide dans le bouilleur (1).

4) Dispositif selon la revendication 2, caractérisé en ce que la température des vapeurs extraites est mesurée par un capteur (27) situé en tête de colonne (16).

5) Dispositif selon la revendication 1, caractérisé en ce que le débit du gaz d'injection est compris entre 0,1 et dix fois le débit des vapeurs.

6) Dispositif selon la revendication 1 ou 5, caractérisé en ce que les moyens d'injection du gaz sont constitués d'orifices percés dans une couronne située à la base de la cheminée (4).

7) dispositif selon la revendication 1 ou 5, caractérisé en ce que les moyens d'injection des gaz sont constitués par des tubes capillaires (30,31) accessibles de l'extérieur par un raccord démontable (60,150,61).

8) Dispositif selon une des revendications précédentes, caractérisé en ce que la colonne (16) et le bouilleur (1) sont réalisés d'une seule pièce en matériau métallique et que l'ensemble est calorifugé.

9) Dispositif selon une des revendications précédentes, caractérisé en ce que la colonne et le bouilleur sont réalisés en une seule pièce en verre et l'ensemble est calorifugé.

## FIG.1A

# FIG. 1B

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 139 418 (C.E. SECH)<br>* revendication 1; figures 1,2 * | 1,2,8 | B 01 D 3/02 |
| A | DE-U-8 329 515 (BREVETTI GAGGIA)<br>* revendications 1,3; figure * | 1,2,8 | |
| A | DE-C- 944 666 (METALLGESELLSCHAFT)<br>* revendication 4; figure 1 * | 1,3,4,8 | |
| A | DD-A- 19 661 (H. REGLER)<br>* revendications 1,2; figure * | 1,2 | |
| A | DE-C- 437 258 (DAMPFKESSEL- UND GASOMETERFABRIK)<br>* revendications 1,2; figure * | 1,2 | |
| A | CHEMIE-INGENIEUR-TECHNKIK<br>vol. 39, 1967, pages 1136-1141,<br>Weinheim, DE; J. HEMPEL: "Rektifikation von Zweistoffgemischen in innen berieselten Rohren" * figure 1 * | 1,2 | **DOMAINES TECHNIQUES RECHERCHES (Int. Cl.5)** |
| A | US-A-2 167 395 (C.A. THOMAS)<br>* figure * | 1,2 | B 01 B 1/06<br>B 01 B 1/08 |
| A | DE-C- 211 528 (H. STOLTZENBERG)<br>* page 1, lignes 4-11; figure 3 * | 1,7 | B 01 D 1/00<br>B 01 D 3/00<br>B 01 D 3/02<br>B 01 D 3/16 |

Le présent rapport a été établi pour toutes les revendications

| Lieu de la recherche | Date d'achèvement de la recherche | Examinateur |
|---|---|---|
| BERLIN | 10-08-1990 | KUEHN P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

              

& : membre de la même famille, document correspondant

EPO FORM 1503 03.82 (P0402)